(19) **Europäisches Patentamt**
**European Patent Office**
**Office européen des brevets**

(11) **EP 1 672 336 B1**

(12) **EUROPEAN PATENT SPECIFICATION**

(45) Date of publication and mention
of the grant of the patent:
**14.03.2012 Bulletin 2012/11**

(51) Int Cl.:
*G01H 1/00* (2006.01)

(21) Application number: **04425918.2**

(22) Date of filing: **14.12.2004**

(54) **A method and a system for monitoring exposure of the occupant of a vehicle to mechanical vibrations, and a vehicle equipped with said monitoring device**

Ein Verfahren und eine Vorrichtung zur Überwachung der Belastung von einem Fahrzeuginsassen durch mechanische Vibrationen und ein Fahrzeug mit einer solchen Überwachungsvorrichtung

Une méthode et un appareil pour enregistrer l'exposition aux vibrations mécaniques d'un occupant d'un véhicule et un véhicule équipé de cet appareil

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**21.06.2006 Bulletin 2006/25**

(73) Proprietor: **C.R.F. Società Consortile per Azioni**
**10043 Orbassano (Torino) (IT)**

(72) Inventors:
• **Brizio, Paola**
**c/o C.R.F. Società Consortile per Azioni**
**10043 Orbassano (IT)**
• **Bargero, Renzo**
**c/o C.R.F. Società Consortile per Azioni**
**10043 Orbassano (IT)**

(74) Representative: **Cerbaro, Elena et al**
**Studio Torta S.p.A.**
**Via Viotti, 9**
**10121 Torino (IT)**

(56) References cited:
**EP-A- 1 050 749          FR-A- 2 497 354**
**US-A1- 2001 044 685**

• **PADDAN G S ET AL: "Evaluation of whole-body vibration in vehicles" JOURNAL OF SOUND AND VIBRATION ACADEMIC PRESS UK, vol. 253, no. 1, 23 May 2002 (2002-05-23), pages 195-213, XP002328916 ISSN: 0022-460X**
• **BELLMANN M.A ET AL: "Comfort inside cars: Effects of seat and steering-wheel vibrations" 36TH UNITED KINGDOM GROUP CONFERENCE ON HUMAN RESPONSE TO VIBRATION, 12 September 2001 (2001-09-12), XP002328917 FARNBOROUGH, ENGLAND**
• **TONG SHUMIN ET AL: "Measurement and Analysis of Small Four-Wheel Tractor" PROCEEDINGS OF 99 INTERNATIONAL CONFERENCE ON AGRICULTURAL ENGINEERING, December 1999 (1999-12), pages I-116-I-118, XP002328918 BEIJING CHINA**
• **FRENDO F. ET AL: "Analysis of Motorscooter Ride Comfort" SOCIETY OF AUTOMOTIVE ENGINEERS, INC., 2002, XP002328919**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a method and a system for monitoring exposure of occupants of a vehicle to mechanical vibrations in order to reduce the risks for their health and safety deriving from said mechanical vibrations, as well as to a vehicle equipped with said monitoring device.

In particular, the present invention finds advantageous, but non-exclusive, application on heavy machinery and vehicles, such as agricultural machines, earth movers, building-site machinery, industrial vehicles, commercial vehicles and working vehicles in general, to which the ensuing treatment will make explicit reference, without this implying any loss of generality.

As is known, operators using working-site machines and the like are every day exposed to mechanical vibrations owing to the irregularities of the road surface or terrain over which the vehicle has to travel or else on account of jerking due to stones, pot-holes, ruts or other obstacles encountered by the vehicle. For example, when the front wheels bump against a rut, the operator is at times almost thrown out of his seat, whilst the vehicle is subjected to an even greater jerk when the rear wheels hit the irregularities of the ground, since the rear wheels are often less well damped than the front ones.

For example, the mechanical vibrations transmitted to the hand-arm system can entail a risk for the health and safety of workers, such as vascular, osteo-articular, neurological, or muscular disorders, whilst the mechanical vibrations transmitted to the entire body can entail a serious risk for the health and safety of workers, such as backache and traumas of the vertebral column.

The level of damage caused to workers by mechanical vibrations varies according to the type of vehicle and is a function of the frequency of the vibrations, their intensity, the direction in which they propagate through the human body, as well as the duration of exposure.

For example, in working machines of small and medium size, the main problem is represented by vibrations having frequencies comprised between 4 Hz and 8 Hz, which propagate along the vertebral column. In work-site machinery or in lorries used in the building industry, instead , the health problems derive from the lateral vibrations at frequencies of between 1 Hz and 2 Hz.

The ISO 2631 standard specifies different methods for determining the level of exposure to mechanical vibrations in relation to human health in order to evaluate the risk associated to said exposure, the possible interference with human activities, the discomfort for the operator, and the possibility of pathological conditions linked to the movement. The above methods apply to movements transmitted to the human body through resting surfaces, such as the feet of a person who is standing or walking, or else the buttocks, feet, or back of a person who is sitting down.

In this connection, different studies have revealed that the best method consists in measuring the weighted value of the vibrations and in processing their content in frequency thanks to the tools made available by numeric processing.

The ISO 2631 standard does not, however, provide indications regarding the maximum limits of exposure to vibrations, but just draws up some guidelines that can be used as basis for establishing said limits.

The directive No. 2002/44/CE of the European Parliament and of the Council of Europe of June 25, 2002 fixes minimum prescriptions in the area of protection of workers against the risks for health and safety that derive, or may derive, from exposure to mechanical vibrations during working operations. In particular, for the vibrations transmitted to the hand-arm system, the daily limit value of exposure normali zed to a reference period of eight hours is fixed at 5 m/s$^2$, whilst the daily value of exposure that triggers the action normalized to a reference period of eight hours is fixed at 2.5 m/s$^2$.

For vibrations transmitted to the entire body, instead, the daily limit value of exposure normalized to a reference period of eight hours is fixed at 1.15 m/s$^2$ or else, according to the choice of the member state, at a value of the amount of vibrations of 21 m/s$^{1.75}$, whilst the daily value of exposure that triggers the action normalized to a reference period of eight hours is fixed at 0.5 m/s$^2$ or else, according to the choice of the member state, at a value of the amount of vibrations of 9.1 m/s$^{1.75}$.

The aforesaid European directive further envisages guidelines regarding the evaluation of exposure to mechanical vibrations transmitted to the hand-arm system and to the entire body.

In particular, said directive establishes that the evaluation of the level of exposure to vibrations transmitted to the hand-arm system must be mainly based upon the calculation of the level of daily exposure normalized to a reference period of eight hours, calculated as square root of the sum of the squares (total value) of the mean square values of the accelerations weighted in frequency, determined on three orthogonal axes, whereas it establishes that the evaluation of the level of exposure to vibrations transmitted to the entire body must be based mainly upon the calculation of the level of daily exposure, expressed as the continuous equivalent acceleration over a reference period of eight hours, calculated as the highest among the mean square values or the highest of the values of the amount of vibrations of the accelerations weighted in frequency, determined on three orthogonal axes.

Document FR 2497354 describes a method of monitoring exposure of the occupant of a vehicle to vibrations comprising the steps of calculating a quantity correlated to the level of exposure of the occupant to the vibrations and supplying an indication of said quantity.

Document US 2001/044685 describes an apparatus and a method for determining when a component of a work vehicle experiences vibration above a predetermined threshold, and responding to the vibration so that the vibration is reduced below the predetermined threshold. The apparatus, which is in a work vehicle that includes a chassis, an operator's cab and an active cab suspension system, includes a sensor that is configured to sense a quantity representative of the vibration experienced by the component of the work vehicle and to develop a first signal indicative of that quantity. The apparatus also includes a signal processor that is coupled to the sensor and is configured to develop, in response to the first signal, a second signal indicative of whether the vibration experienced by the component is above the predetermined threshold. The apparatus further includes a device that is coupled to the signal processor and, in response, to the second signal, is either configured to provide an indication or configured to take an action to reduce the vibration below the predetermined threshold when the vibration is above the predetermined threshold. Document PADDAN G S ET AL : "Evaluation of whole-body vibration-in vehicles" describes an equipment and a procedure for evaluating vibration with respect to the human responses to whole-body vibration, in accord with the Standards BS6841 and ISO2631. In this document vibration was measured using piezoresistive full-bridge accelerometers and measurement where obtained at the driver-seat interfaces using a semi-rigid mounting disc containing mutually perpendicular accelerometers to measure triaxial vibration on the seat. Furthermore, a similar mounting disc containing one accelerometer was used to measure fore-and-aft backrest vibration.

The purpose of the present invention is to provide a method and a system for monitoring the exposure of the occupant of a vehicle to mechanical vibrations in order to reduce the risks for health and safety deriving therefrom, and to a vehicle equipped with said monitoring system.

The foregoing purpose is achieved by the present invention in so far as it relates to a method and to a system for monitoring exposure of the occupant of a vehicle to mechanical vibrations, and to a vehicle equipped with said monitoring system, as defined in Claims 1, 22 and 43, respectively.

For a better understanding of the present invention, there is now described a preferred embodiment thereof, provided purely by way of non-limiting example, with reference to the attached plate of drawings, in which:

- Figure 1 shows a machine provided with a monitoring device made according to the present invention;
- Figure 2 shows a flowchart of the operations carried out by the monitoring device of Figure 1;
- Figure 3 illustrates different transfer functions of a driving seat of a machine obtained in different operating conditions; and
- Figure 4 shows the transfer characteristic of a Griffin filter for the vertical vibrations transmitted to the entire body, through the seat, to a person sitting thereon, according to the ISO 2631 standard.

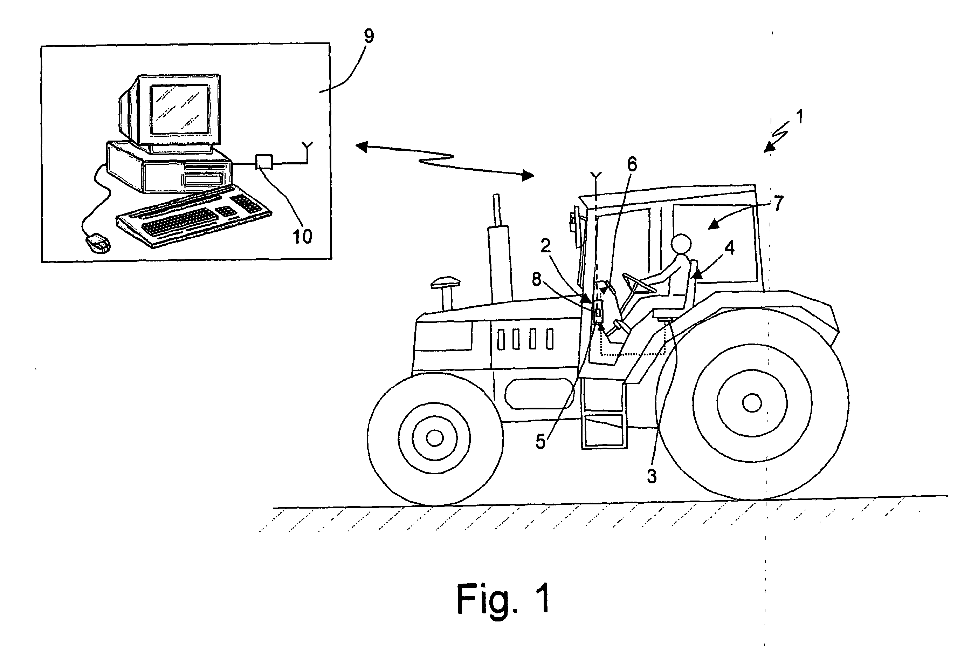

Illustrated in Figure 1, and designated as a whole by the reference number 1, is a machine, in the example illustrated a tractor, provided with a system 2 for monitoring exposure of the operator to mechanical vibrations, built according to the present invention.

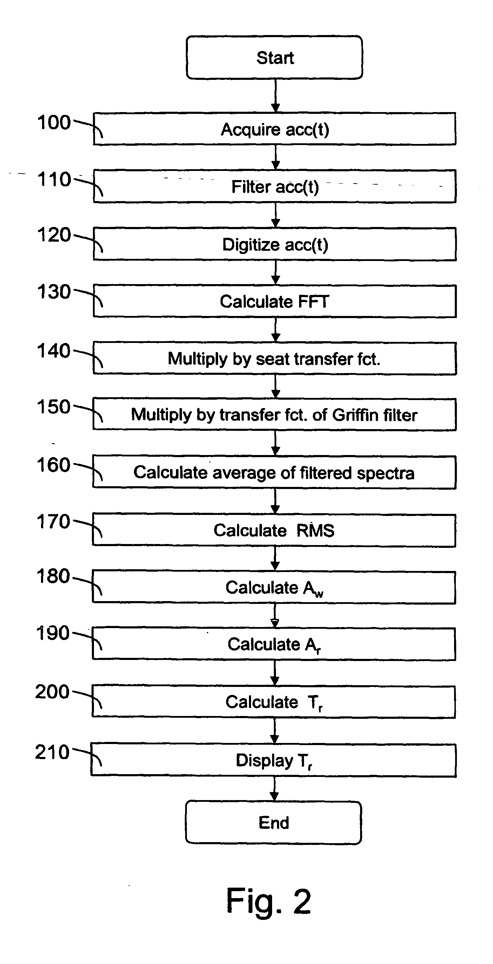

The monitoring device 2 comprises: an accelerometric sensor 3, which is set underneath the driving seat 4 of the machine 1 and supplies an accelerometric signal acc(t) of an analog type, indicating the vertical acceleration underneath the driving seat 4 itself; a processing unit 5, for example of the microprocessor type, provided with an internal memory and connected to the accelerometric sensor 3 for processing the accelerometric signal acc(t) supplied thereby in order to evaluate the level of exposure to mechanical vibrations of the operator working with the machine 1 during a working session, in the way described in detail hereinafter with reference to the flowchart of Figure 2; and a display unit 6, which is set inside a driving cab 7 of the machine 1 and is connected to the processing unit 5 in order to supply the operator with information on the level of his exposure to mechanical vibrations in relation to the daily value of exposure that triggers the action normalized to a reference period of eight hours (0 .5 m/s$^2$) and to the daily limit value of exposure normalized to a reference period of eight hours (1 .15 m/s$^2$) set by the aforementioned European directive.

Figure 2 shows a flowchart of the operations performed by the processing unit 5 for determining the level of exposure to mechanical vibrations of the operator of the machine 1 during a working session.

As is shown in Figure 2, the accelerometric signal acc(t) is acquired by the processing unit 5 (block 100) and then filtered by means of an antialiasing filter for the purpose of limiting its spectrum in frequency so as to eliminate the presence, in the sampled signal, of the so-called "image frequencies", which are generated during the subsequent step of sampling of the accelerometric signal acc(t) and do not enable correct reconstruction of the accelerometric signal acc (t) itself (block 110).

The filtered accelerometric signal is then sampled, quantized and thus converted into a digitized accelerometric signal formed by a sequence of samples, which are stored in the internal memory of the processing unit (block 120).

Advantageously, but not exclusively, the accelerometric signal acc(t) can be sampled at a frequency of 500 Hz, there being thus generated 500 samples per second of the digitized accelerometric signal.

The digitized accelerometric signal is then converted into the frequency domain, first of all by dividing the signal into successive time windows and then calculating the fast Fourier transform (FFT) of the samples of the digitized accelerometric signal within each time window (block 130). In this way, a sequence of spectra is generated, designated in what follows by the term "seat-end spectra", each representing the spectral content of the digitized accelerometric signal within the corresponding time window.

The width of each time window, and hence the number of samples on which the FFT is calculated, depends upon the precision with which it is desired to evaluate the effects of exposure to vibrations. If it is desired, for instance, to evaluate the effects of exposure to vibrations within time windows of 30 seconds, in the example indicated above, i.e., with a sampling frequency of 500 Hz, corresponding to the generation of 500 samples per second, each FFT will be calculated on a set of 15 000 samples of the digitized accelerometric signal.

Each of the seat-end spectra is then multiplied by the transfer function of the driving seat 4, and a sequence of spectra is thus obtained, which represents the spectral content of the vertical acceleration acting on the operator in successive time windows, in what follows designated by the term "operator-end spectra" (block 140).

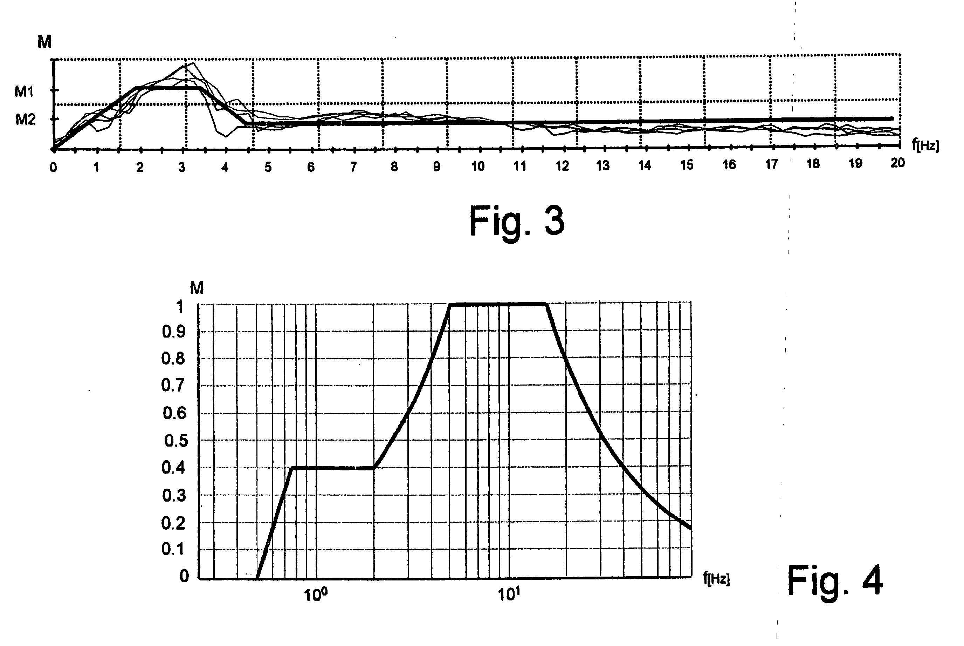

Said transfer function takes into account both the average effect of the foam rubber of the driving seat 4 a nd the average effect of man-seat interaction, in such a way that it is possible to derive the vertical acceleration at the seat-operator interface by measuring the vertical acceleration acting on the driving seat 4 . In particular, the transfer function of the driving seat 4 presents the graph in frequency shown in Figure 3 (thick line), and has been derived by interpolating different transfer functions (thin lines) regarding different operating conditions of the machine 1 , amongst which the ones corresponding to use thereof on terrain of a rough type and of a rutted type and with and without harrow being attached to the tractor.

Advantageously, but not exclusively, the graph in frequency of the magnitude M of the transfer function of the driving seat 4 comprises: a first stretch increasing in a substantially linear way from an initial value $M_0$ practically zero to a final value $M_1$ equal to approximately 2 for frequencies comprised between approximately 0 Hz and 2 Hz; a second stretch substantially constant at the value $M_1$ for frequencies comprised between approximately 2 Hz and 3.5 Hz; a third stretch decreasing in a substantially linear way from the initial value $M_1$ to a final value $M_2$ equal to approximately 0.8 for frequencies comprised between approximately 3.5 Hz and 4.5 Hz; and a fourth stretch substantially constant at the value $M_2$ for frequencies higher than 4.5 Hz.

With reference once again to the flowchart of Figure 2, each of the operator-end spectra is then filtered by multiplying it by the transfer function of a filter known as "Griffin filter" $W_b$ so that a sequence of spectra is obtained, which are referred to in what follows as "filtered spectra" (block 150).

In particular, the Griffin filter $W_b$ is a filter the characteristics of which are defined by the ISO 2631 standard for weighting in a different manner the various spectral components of the vertical acceleration acting on the operator so as to bring out the spectral components at the most troublesome frequencies of vibration and attenuate the ones to which the human body is less sensitive.

The transfer function of the Griffin filter $W_b$ has the graph in frequency shown in Figure 4. In particular, the graph in frequency of the magnitude M of the transfer function of the Griffin filter $W_b$ comprises: a first stretch substantially constant at a initial value $M_0$ practically zero for frequencies lower than 0.5 Hz; a second stretch increasing in a substantially linear way from the value $M_0$ to a value $M_1$ equal to approximately 0.4 for frequencies comprised between approximately 0.5 Hz and 0.75 Hz; a third stretch substantially constant at the value $M_1$ for frequencies comprised between approximately 0.75 Hz and 2 Hz; a fourth stretch increasing in a substantially linear way from the initial value $M_1$ to a final value $M_2$ equal approximately to 1 for frequencies comprised between approximately 2 Hz and 5 Hz; a fifth stretch substantially constant at the value $M_2$ for frequencies comprised between approximately 5 Hz and 16 Hz; and a sixth stretch decreasing in a substantially exponential way for frequencies higher than 16 Hz.

With reference again to the flowchart of Figure 2, there is then calculated the average of the filtered spectra (block 160). In order to calculate said average without having to store in memory all the filtered spectra, the average of the filtered spectra is calculated by updating the average of the filtered spectra calculated on the basis of the previous filtered spectrum, applying the following formula:

$$FFT_{av_i} = \frac{FFT_{av_{i-1}} \cdot (i - 1) + FFT_i}{i}$$

where $FFT_i$ is i-th filtered spectrum, corresponding to the i-th set of 15 000 samples, $FFT_{av_{i-1}}$ is the average of the filtered spectra calculated on the basis of the preceding filtered spectrum, and $FFT_{av_i}$ is the average of the updated filtered spectra.

Then, there is carried out a calculation of a mean square deviation or root mean square $RMS_i$ (block 170) and of a weighted acceleration $A_{w_i}$ on the basis of the i-th average of the filtered spectra (block 180) .

In particular, the root mean square $RMS_i$ provides an indication of the vibrational energy, i.e., of the total level of vibration to which the operator has been subjected up to the instant considered. Said value is calculated on the updated average of the filtered spectra $FFT_{av}$ according to the formula:

$$RMS_i = \sqrt{\sum_{j=1}^{N} \left(f_{avi_j}\right)^2}$$

where $f_{avi_j}$ are the N spectral lines of the average of the updated filtered spectra $FFT_{avi}$ (where N depends upon the boundary parameters supplied at input to the algorithm for calculation of the FFT).

The weighted acceleration $A_{wi}$, instead, provides an indication of the level of exposure of the operator to mechanical vibrations from the start of the working session, and is defined by the ISO 2631 standard as:

$$A(8) = a_v \sqrt{\frac{T_0}{8}}$$

where $a_v$ is the root mean square of the acceleration absorbed by the operator from the start of the working session, $T_0$ is the duration in hours of the exposure of the operator to vibration, and 8 is the duration in hours of the reference period taken in consideration by the ISO 2631 standard.

If the duration To of the exposure of the operator to vibrations is expressed as a function of the width of the time windows of analysis of the digitized accelerometric signal, for the i-th weighted acceleration $A_{wi}$ calculated we have:

$$A_{w_i} = RMS_i \cdot \sqrt{\frac{i \cdot T}{8}}$$

where $RMS_i$ is i-th root mean square, and T is the duration in hours of each time window of analysis of the digitized accelerometric signal, in the example considered 30 seconds.

Then, there is calculated a residual weighted acceleration $A_{r1}$ with respect to a limit weighted acceleration $A_{lim}$ corresponding to the daily value of exposure that triggers the action normalized to a reference period of eight hours (0.5 m/s$^2$) and to the daily limit value of exposure normalized to a reference period of eight hours (1.15 m/s$^2$) set by the aforementioned European directive, according to the formula (block 190) :

$$A_{r_i} = A_{lim} - A_{w_i}$$

Although the residual weighted acceleration $A_{r1}$ is a quantity that supplies a point information on the level of exposure of the operator to vibrations in relation to the aforementioned daily value and daily limit value, said quantity is not of immediate interpretation for the operator himself.

For this reason, on the basis of the residual weighted acceleration $A_{r1}$, there is then calculated another quantity of more ready interpretation by the operator, namely, the residual exposure time $T_{r1}$, i.e., the time that the operator can still work before reaching the daily value and daily limit value set by the aforementioned European directive (block 200).

In particular, the residual exposure time $T_{r1}$ can be calculated for example according to the following formula:

$$\frac{RMS_i * i + RMS_{10} * \dfrac{T_{r_i}}{T_{b1}}}{i + \dfrac{T_{r_i}}{T_{b1}}} * \sqrt{\frac{i * T_{b1} + T_{r_i}}{8}} = 0.5$$

where $RMS_{10}$ is the root mean square of the last ten filtered spectra, which, in the example considered, correspond to the last five minutes of exposure to vibrations, and $T_{b1}$ is the duration in hours of the time interval corresponding to the last ten filtered spectra, in the example considered five minutes.

The last ten filtered spectra are stored in memory and, for each new filtered spectrum calculated, the oldest filtered spectrum is eliminated from the memory in order to leave space to the new one, and the average of the filtered spectra is then recalculated and along with it the residual exposure time.

In this way, the estimation of the residual exposure time is sensitive to the discontinuity of the level of vibration absorbed for example due to the change of operation or to carrying out of a transfer, but is not sensitive to individual peaks of acceleration that would render it excessively unstable.

Finally, the residual exposure time $T_{r_1}$ is displayed on the display unit 6 of the machine 1 for the purpose of signalling to the operator how long he can still work before reaching the daily value and daily limit value set by the aforementioned European directive (block 210).

Possibly, upon reaching of said values, the processing unit 5 could also undertake actions on the machine 1 designed to force the operator to interrupt the working session, such as, for example, issue a command for turning off of the machine for a pre-set time or issue a command for interruption of the operation of the implements (plough, harrow, etc.) currently being used.

Furthermore, whenever the machine 1 is temporarily turned off and, consequently, the working session is temporarily interrupted, for example because the operator wants to have a break during the working session, the electronic control unit stores all the data calculated up to that moment (spectra, weighted acceleration, time of use of the machine, residual exposure time, etc.) and necessary for continuing calculation of the residual exposure time upon restarting of the machine.

It is moreover pointed out that the daily value and daily limit value of exposure set by the aforementioned European directive refer to a single operator, so that the actions undertaken by the electronic control unit on the machine are aimed at forcing the operator who has reached said values of exposure to interrupt the working session, so that nothing prevents said working session to be continued by another operator who has not yet reached said values of exposure. Hence, for this reason, the electronic control unit could be programmed in such a way as to handle the use of the machine 1 by a number of operators, for example storing first of all the level of exposure of each operator to vibrations, and then requesting, upon starting of the machine 1, identification data of the operator who is about to start his own working session, and finally enabling use of the machine or of its implements for said operator only if he has not yet reached the daily value and daily limit value of exposure.

Finally, it is clear that modifications and variations can be made to the method and device described and illustrated herein, without thereby departing from the sphere of protection of the present invention, as defined in the annexed claims.

For example, instead of supplying the indication of the residual exposure time, there the operator could be supplied with a percentage indication of the level of exposure to vibrations from the start of the working session with respect to the daily value and to the daily limit value of exposure set down by the European directive, or else directly an absolute indication of the level of exposure to vibrations from the start of the working session, or once again directly the indication of the weighted acceleration. Alternatively, the indication supplied to the operator could even not be a numerical indication, but rather a visual indication of a warning-light type, for example using green, orange and red warning lights, where the green warning light informs the operator that he is far from the daily value and the daily limit value set down by the European directive, the orange warning light alerts the operator that he is close to said values of exposure, and the red warning light warns the operator that he has reached said values of exposure.

Alternatively, the information regarding the level of exposure of the operator to vibrations, whether it is the residual exposure time, the percentage or absolute indication of the level of exposure, or else the weighted acceleration, can be supplied to the operator, rather than visually via a display unit, for example using an acoustic-warning unit.

Furthermore, the accelerometric sensor 3, instead of being set under the driving seat 4, could alternatively be carried by the seat or by the backrest of the driving seat 4, by the foot-resting surface, or else, where the application so enables, directly on the operator. Furthermore, the vertical acceleration acting on the operator could be determined using a number of accelerometric sensors 3 arranged in the most appropriate manner.

In addition, in a scenario where the machine 1 forms part of a fleet of machines for example of a large farm, it could prove convenient to transmit the information regarding the level of exposure of the operator to mechanical vibrations (the residual exposure time, the percentage or absolute indication of the residual acceleration or else of the weighted acceleration), calculated by the electronic control unit 5 of the machine 1, to a remote monitoring station 9, which then uses this information for handling the subsequent activity of the operator. To do this, each machine 1 would consequently have to be provided, in addition to, or instead of, the display unit 6, with a transmitting unit, designated by 8 in Figure 1, as likewise the remote monitoring station 9 would have to be provided with a receiving unit, designated by 10 in Figure 1.

Alternatively, the calculation of the level of exposure of the operator to vibrations, instead of being performed by the electronic control unit 5 of the machine 1, could be performed remotely by the control station on the ground on the basis of the accelerometric signal acc(t) supplied by the accelerometric sensor 3 and transmitted by the transmitting unit 8. In this case, hence, the information on the level of exposure of the operator to vibrations could be supplied to the operator in various ways, amongst which via transmission of said information to the machine 1 and then display thereof on the display unit 6. In order to do this, both the transmitting unit 8 and the receiving unit 10 would have to be replaced with transceiving units capable both of transmitting and of receiving information.

Finally, what has been described previously with reference to the operator of the machine can also be applied to a generic occupant of any one of the vehicles referred to at the start of the description, for which it is desired to reduce the risks for health and safety deriving from a prolonged exposure to mechanical vibrations.

**Claims**

1. A method for monitoring exposure of the occupant of a vehicle (1) to mechanical vibrations, comprising the following steps:

   • calculating a quantity ($A_{w_1}$; $A_{r_1}$; $T_{r_1}$) correlated to the level of exposure of the occupant to the mechanical vibrations; and
   • supplying an indication of said quantity ($A_{w_1}$; $A_{r_1}$; $T_{r_1}$) ;

   the step of calculating a quantity ($A_{w_1}$; $A_{r_1}$; $T_{r_1}$) correlated to the level of exposure of the occupant to mechanical vibrations comprises:

   • determining the intensity (acc(t)) of the mechanical vibrations to which said occupant is exposed; and
   • calculating said quantity ($A_{w_1}$; $A_{r_1}$; $T_{r_1}$) as a function of the intensity (acc(t)) of said mechanical vibrations;

   the method being **characterized in that** the step of determining the intensity (acc(t)) of the mechanical vibrations to which said occupant is exposed comprises the following:

   • generating an accelerometric signal (acc(t)) indicating the intensity of the mechanical vibrations present on a seat (4) of said vehicle (1) on which said occupant is sitting;

   and **in that** the step of calculating said quantity ($A_{w_1}$; $A_{r_1}$; $T_{r_1}$) comprises:

   • calculating said quantity ($A_{w_1}$; $A_{r_1}$; $T_{r_1}$ as a function of said accelerometric signal (acc(t)) and of a transfer function of said seat (4).

2. The method according to Claim 1, in which said quantity ($A_{w_1}$) indicates directly said residual level of exposure of the occupant to mechanical vibrations.

3. The method according to Claim 1, in which said quantity ($A_{r_1}$; $T_{r_1}$) indicates a residual level of exposure of the occupant to mechanical vibrations.

4. The method according to Claim 1, in which generating an accelerometric signal (acc(t)) comprises:

   • providing accelerometric sensor means (3) underneath said seat (4).

5. The method according to Claim 1 or Claim 4, in which calculating said quantity ($A_{w_1}$; $A_{r_1}$; $T_{r_1}$) as a function of said accelerometric signal (acc(t)) and of a transfer function of said seat (4) comprises:

   • filtering said accelerometric signal (acc(t)) via a Griffin filter; and
   • calculating said quantity ($A_{w_1}$; $A_{r_1}$; $T_{r_1}$) as a function of said filtered accelerometric signal and of said transfer function of said seat (4).

6. The method according to Claim 5, in which calculating said quantity ($A_{w_1}$; $A_{r_1}$; $T_{r_1}$) as a function of said filtered accelerometric signal and of said transfer function of said seat (4) comprises:

   • converting portions of said accelerometric signal (acc(t)) into the frequency domain, obtaining a sequence of spectra;
   • multiplying each of said spectra by said transfer function of said seat (4) and by a transfer function of said Griffin filter;
   • calculating a mean spectrum ($FFT_{av_i}$) as a function of said filtered spectra;
   • calculating a root mean square ($RMS_i$) as a function of said mean spectrum ($FFT_{av_i}$); and

• calculating said quantity ($A_{w_1}$; $A_{r_1}$; $T_{r_1}$) as a function of said root mean square ($RMS_i$).

7. The method according to Claim 6, in which calculating said quantity ($A_{w_1}$; $A_{r_1}$; $T_{r_1}$) comprises:

• calculating a weighted acceleration ($A_{w_1}$).

8. The method according to Claim 7, in which calculating said quantity ($A_{w_1}$; $A_{r_1}$; $T_{r_1}$) further comprises:

• calculating a residual weighted acceleration ($A_{r_1}$) as a function of said weighted acceleration ($A_{w_1}$) and of a limit weighted acceleration ($A_{lim}$).

9. The method according to Claim 8, in which calculating said quantity ($A_{w_1}$; $A_{r_1}$; $T_{r_1}$) further comprises:

• calculating a residual exposure time ($T_{r_1}$) as a function of said residual weighted acceleration ($A_{r_1}$).

10. The method according to any one of the preceding claims, in which the calculation of said quantity ($A_{w_1}$; $A_{r_1}$; $T_{r_1}$) is performed on board said vehicle (1).

11. The method according to any one of the preceding claims, in which supplying an indication of said quantity ($A_{w_1}$) comprises:

• supplying a direct indication ($A_{w_1}$) of said level of exposure of the occupant to mechanical vibrations.

12. The method according to any one of Claims 2 to 10, in which supplying an indication of said quantity ($A_{r_1}$, $T_{r_1}$) comprises:

• supplying an indication ($A_{r_1}$, $T_{r_1}$) of said residual level of exposure of the occupant to mechanical vibrations.

13. The method according to Claim 7, in which supplying an indication of said quantity ($A_{w_1}$) comprises:

• supplying an indication of said weighted acceleration ($A_{w_1}$).

14. The method according to Claim 8, in which supplying an indication of said quantity ($A_{r_1}$, $T_{r_1}$) comprises:

• supplying a direct indication of said residual weighted acceleration ($A_{r_1}$).

15. The method according to Claim 8, in which supplying an indication of said quantity ($A_{r_1}$, $T_{r_1}$) comprises:

• supplying an indication of said residual weighted acceleration ($A_{r_1}$) with respect to a limit weighted acceleration ($A_{lim}$).

16. The method according to Claim 9, in which supplying an indication of said quantity ($A_{r_1}$, $T_{r_1}$) comprises:

• supplying an indication of said residual exposure time ($T_{r_1}$).

17. The method according to any one of the preceding claims, in which said indication of said quantity ($A_{r_1}$, $T_{r_1}$) is supplied to said occupant of said vehicle (1).

18. The method according to any one of Claims 1 to 16, in which supplying an indication of said quantity ($A_{w_1}$, $A_{r_1}$, $T_{r_1}$) comprises:

• transmitting said quantity ($A_{w1}$, $A_{r_1}$, $T_{r_1}$) to a remote monitoring station (9).

19. The method according to Claim 1, in which supplying an indication of said quantity ($A_{w_1}$, $A_{r_1}$, $T_{r_1}$) comprises:

• transmitting said accelerometric signal (acc(t)) to a remote monitoring station (9).

20. The method according to Claim 19, in which said quantity ($A_{w_1}$; $A_{r_1}$; $T_{r_1}$) is calculated in said remote monitoring

**EP 1 672 336 B1**

station (9).

21. The method according to Claim 20, in which supplying an indication of said quantity ($A_{w_1}$, $A_{r_1}$, $T_{r_1}$) comprises:

  • transmitting said quantity ($A_{w_1}$; $A_{r_1}$; $T_{r_1}$) to said vehicle (1) ; and
  • supplying said indication of said quantity ($A_{w_1}$, $A_{r_1}$, $T_{r_1}$) to said occupant of said vehicle (1).

22. A system (2) for monitoring exposure of the occupant of a vehicle (1) to mechanical vibrations, comprising:

  • calculation means (5) for calculating a quantity ($A_{w_1}$; $A_{r_1}$; $T_{r_1}$) correlated to the level of exposure of the occupant to mechanical vibrations; and
  • signalling means (6, 8) for supplying an indication of said quantity ($A_{w_1}$; $A_{r_1}$; $T_{r_1}$);

the system further comprising:

  • determination means (3) for determining the intensity (acc(t)) of the mechanical vibrations to which said occupant is exposed;

and in which said calculation means (5) are configured for calculating said quantity ($A_{w_1}$; $A_{r_1}$; $T_{r_1}$) as a function of the intensity (acc(t)) of said mechanical vibrations;
**characterized in that** said determination means (3) comprise:

  • accelerometric sensor means (3) supplying an accelerometric signal (acc(t)) indicating the intensity of the mechanical vibrations present on a seat (4) of said vehicle (1) on which said occupant is sitting;

and in which said calculation means (5) are configured for calculating said quantity ($A_{w_1}$; $A_{r_1}$; $T_{r_1}$) as a function of said accelerometric signal (acc(t)) and of a transfer function of said seat (4).

23. The system according to Claim 22, in which said quantity ($A_{w_1}$) indicates directly said residual level of exposure of the occupant to mechanical vibrations.

24. The system according to Claim 22, in which said quantity ($A_{r_1}$; $T_{r_1}$) indicates a residual level of exposure of the occupant to mechanical vibrations.

25. The system according to Claim 22, in which said accelerometric sensor means (3) are carried underneath said seat (4).

26. The system according to Claim 22, in which said calculation means (5) are configured for:

  • filtering said accelerometric signal (acc(t)) via a Griffin filter;
  • calculating said quantity ($A_{w_1}$; $A_{r_1}$; $T_{r_1}$ as a function of said filtered accelerometric signal and of said transfer function of said seat (4).

27. The system according to Claim 26, in which said calculation means (5) are configured for:

  • converting into the frequency domain portions of said accelerometric signal (acc(t)), to obtain a sequence of spectra;
  • multiplying each of said spectra by said transfer function of said seat (4) and by a transfer function of said Griffin filter;
  • calculating a mean spectrum ($FFT_{av_i}$) as a function of said filtered spectra;
  • calculating a root mean square ($RMS_i$) as a function of said mean spectrum ($FFT_{av_i}$) ; and
  • calculating said quantity ($A_{w1}$; $A_{r_1}$; $T_{r_1}$) as a function of said root mean square ($RMS_i$).

28. The system according to Claim 27, in which said calculation means (5) are configured for:

  • calculating a weighted acceleration ($A_{w_1}$).

29. The system according to Claim 28, in which said calculation means (5) are configured for:

9

• calculating a residual weighted acceleration ($A_{r_1}$) as a function of said weighted acceleration ($A_{w_1}$) and of a limit weighted acceleration ($A_{lim}$).

**30.** The system according to Claim 29, in which said calculation means (5) are configured for:

• calculating a residual exposure time ($T_{r_1}$) as a function of said residual weighted acceleration ($A_{r_1}$).

**31.** The system according to Claim 22, in which said calculation means (5) are carried by said vehicle (1).

**32.** The system according to Claim 22, in which said signalling means (6, 8) are configured for supplying a direct indication ($A_{w_1}$) of said level of exposure of the occupant to mechanical vibrations.

**33.** The system according to Claim 23, in which said signalling means (6, 8) are configured for supplying an indication ($a_{r_1}$, $T_{r_1}$) of said residual level of exposure of the occupant to mechanical vibrations.

**34.** The system according to Claim 28, in which said signalling means (6) are configured for supplying an indication of said weighted acceleration ($A_{w_1}$).

**35.** The system according to Claim 29, in which said signalling means (6, 8) are configured for supplying a direct indication of said residual weighted acceleration ($A_{r_1}$.

**36.** The system according to Claim 29, in which said signalling means (6, 8) are configured for supplying an indication of said residual weighted acceleration ($A_{r_1}$) with respect to a limit weighted acceleration ($A_{lim}$).

**37.** The system according to Claim 30, in which said signalling means (6, 8) are configured for supplying an indication of said residual exposure time ($T_{r_1}$).

**38.** The system according to Claim 22, in which said signalling means (6, 8) are carried by said vehicle (1).

**39.** The system according to Claim 22, in which said signalling means (6, 8) comprise transmitting means (8) for transmitting said quantity ($A_{w_1}$, $A_{r_1}$, $T_{r_1}$) to a remote monitoring station (9).

**40.** The system according to Claim 22, in which said signalling means (6, 8) comprise transmitting means (8) for transmitting said accelerometric signal (acc(t)) to a remote monitoring station (9).

**41.** The system according to Claim 40, in which said calculation means (5) are arranged in said remote monitoring station (9).

**42.** The system according to Claim 41, in which said signalling means (6, 8) comprise transmitting means (8) arranged in said remote monitoring station (9) for transmitting said quantity ($A_{w_1}$, $A_{r_1}$, $T_{r_1}$) to said vehicle (1), and receiving means (8) carried by said vehicle (1) for receiving said transmitted quantity ($A_{w_1}$, $A_{r_1}$, $T_{r_1}$) ;
and in which said signalling means (6, 8) are configured for supplying said indication of said quantity ($A_{w_1}$, $A_{r_1}$, $T_{r_1}$) to said occupant of said vehicle (1).

**43.** A vehicle (1) equipped with a system (2) for monitoring exposure of an occupant of said vehicle (1) to mechanical vibrations, according to any one of Claims 22-42.

**Patentansprüche**

**1.** Ein Verfahren zum Überwachen der Belastung des Insassen eines Fahrzeugs (1) durch mechanische Vibrationen, welches die folgenden Schritte umfasst:

• Berechnen einer Größe ($A_{w_1}$ ; $A_{r_1}$ ; $T_{r_1}$) bezogen auf das Belastungslevel des Insassen durch die mechanischen Vibrationen; und
• Liefern eines Hinweises dieser Größe ($A_{w_1}$ ; $A_{r_1}$ ; $T_{r_1}$) ;

der Schritt des Berechnens einer Größe ($A_{w_1}$ ; $A_{r_1}$ ; $T_{r_1}$) bezogen auf das Belastungslevel des Insassen durch die mechanischen Vibrationen umfasst:

- Ermitteln der Intensität (acc(t)) der mechanischen Vibrationen, denen der Insasse ausgesetzt ist; und
- Berechnen der Größe ($A_{w_1}$ ; $A_{r_1}$ ; $T_{r_1}$) als eine Funktion der Intensität (acc(t)) der mechanischen Vibrationen;

wobei das Verfahren **dadurch gekennzeichnet ist, dass** der Schritt des Erfassens der Intensität (acc(t)) der mechanischen Vibrationen, denen der Insasse ausgesetzt ist, Folgendes umfasst:

- Erzeugen eines beschleunigungsmessenden Signals (acc(t)), welches auf die Intensität der mechanischen Vibrationen hinweist, die auf einem Sitz (4) des Fahrzeugs (1), auf dem der Insasse sitzt, herrschen;

und **dadurch**, dass der Schritt des Berechnens der Größe ($A_{w_1}$ ; $A_{r_1}$ ; $T_{r_1}$) umfasst:

- Berechnen der Größe ($A_{w_1}$ ; $A_{r_1}$ ; $T_{r_1}$) als eine Funktion des beschleunigungsmessenden Signals (acc(t)) und einer Übertragungsfunktion des Sitzes (4).

2. Das Verfahren nach Anspruch 1, in dem die Größe ($A_{w_1}$) direkt auf das verbleibende Belastungslevel des Insassen durch mechanische Vibrationen hinweist.

3. Das Verfahren nach Anspruch 1, in dem die Größe ($A_{r_1}$ ; $T_{r_1}$) *auf* ein verbleibendes Belastungslevel des Insassen durch mechanische Vibrationen hinweist.

4. Das Verfahren nach Anspruch 1, in dem das Erzeugen eines beschleunigungsmessenden Signals (acc(t)) umfasst:

- Vorsehen eines beschleunigungsmessenden Sensormittels (3) unter dem Sitz (4).

5. Das Verfahren nach Anspruch 1 oder Anspruch 4, in dem das Berechnen der Größe ($A_{w_1}$ ; $A_{r_1}$ ; $T_{r_1}$) als eine Funktion des beschleunigungsmessenden Signals (acc(t)) und einer Übertragungsfunktion des Sitzes (4) umfasst:

- Filtern des beschleunigungsmessenden Signals (acc(t)) mittels eines Griffin-Filters; und
- Berechnen der Größe ($A_{w_1}$ ; $A_{r_1}$ ; $T_{r_1}$) als eine Funktion des gefilterten beschleunigungsmessenden Signals und der Übertragungsfunktion des Sitzes (4).

6. Das Verfahren nach Anspruch 5, in dem das Berechnen der Größe ($A_{w_1}$ ; $A_{r_1}$ ; $T_{r_1}$) als eine Funktion des gefilterten beschleunigungsmessenden Signals und der Übertragungsfunktion des Sitzes (4) umfasst:

- Umwandeln von Abschnitten des beschleunigungsmessenden Signals (acc(t)) in den Frequenzbereich, Erhalten einer Spektrensequenz;
- Multiplizieren eines jeden der Spektren durch die Übertragungsfunktion des Sitzes (4) und durch eine Übertragungsfunktion des Griffin-Filters;
- Berechnen eines mittleren Spektrums ($FFT_{avi}$) als eine Funktion der gefilterten Spektren;
- Berechnen eines quadratischen Mittels ($RMS_i$) als eine Funktion des mittleren Spektrums ($FFT_{avi}$) ; und
- Berechnen der Größe ($A_{w_1}$ ; $A_{r_1}$ ; $T_{r_1}$) als eine Funktion des quadratischen Mittels ($RMS_i$).

7. Das Verfahren nach Anspruch 6, in welchem das Berechnen der Größe ($A_{w_1}$ ; $A_{r_1}$ ; $T_{r_1}$) umfasst:

- Berechnen einer gewichteten Beschleunigung ($A_{w_1}$).

8. Das Verfahren nach Anspruch 7, in welchem ein Berechnen der Größe $A_{w_1}$ ; $A_{r_1}$ ; $T_{r_1}$) ferner umfasst:

- Berechnen einer verbleibenden gewichteten Beschleunigung ($A_{r_1}$) als eine Funktion der gewichteten Beschleunigung ($A_{w_1}$) und eines Grenzwerts einer gewichteten Beschleunigung ($A_{lim}$).

9. Das Verfahren nach Anspruch 8, in welchem ein Berechnen der Größe ($A_{w_1}$ ; $A_{r_1}$ ; $T_{r_1}$) ferner umfasst:

- Berechnen einer verbleibenden Belastungszeit ($T_{r_1}$) als eine Funktion der verbleibenden gewichteten Beschleunigung ($A_{r_1}$).

**10.** Das Verfahren nach einem der vorhergehenden Ansprüche, in welchem das Berechnen der Größe ($A_{w_1}$ ; $A_{r_1}$ ; $T_{r_1}$) an Bord des Fahrzeugs (1) durchgeführt wird.

**11.** Das Verfahren nach einem der vorhergehenden Ansprüche, in welchem ein Liefern eines Hinweises auf die Größe ($A_{w_1}$) umfasst:

• Liefern eines direkten Hinweises ($A_{w_1}$) des Belastungslevels des Insassen durch mechanische Vibrationen.

**12.** Das Verfahren nach einem der Ansprüche 2 bis 10, in welchem ein Liefern eines Hinweises auf die Größe *($A_{r_1}$ ; $T_{r_1}$)* umfasst:

• Liefern eines Hinweises $A_{r_1}$ ; $T_{r_1}$) des verbleibenden Belastungslevels des Insassen durch mechanische Vibrationen.

**13.** Das Verfahren nach Anspruch 7, in welchem ein Liefern eines Hinweises auf die Größe ($A_{w_1}$) umfasst:

• Liefern eines Hinweises der gewichteten Beschleunigung ($A_{w_1}$).

**14.** Das Verfahren nach Anspruch 8, in welchem ein Liefern eines Hinweises der Größe $A_{r_1}$ ; $T_{r_1}$) umfasst:

• Liefern eines direkten Hinweises auf die verbleibende gewichtete Beschleunigung ($A_{r_1}$).

**15.** Das Verfahren nach Anspruch 8, in welchem ein Liefern eines Hinweises auf die Größe ($A_{r_1}$ ; $T_{r_1}$) umfasst:

• Liefern eines Hinweises auf die verbleibende gewichtete Beschleunigung ($A_{r_1}$) hinsichtlich eines Grenzwertes der gewichteten Beschleunigung ($A_{lim}$).

**16.** Das Verfahren nach Anspruch 9, in welchem ein Liefern der Größe ($A_{r_1}$ ; $T_{r_1}$) umfasst:

• Liefern eines Hinweises auf die verbleibende Belastungszeit *($T_{r_1}$*.

**17.** Das Verfahren nach einem der vorhergehenden Ansprüche, in welchem der Hinweis auf die Größe *($A_{r_1}$ ; $T_{r_1}$)* an den Insassen des Fahrzeugs (1) geliefert wird.

**18.** Das Verfahren nach einem der Ansprüche 1 bis 16, in welchem das Liefern eines Hinweises auf die Größe (*$A_{w_1}$ ; $A_{r_1}$ ; $T_{r_1}$)* umfasst:

• Übertragen der Größe ($A_{w_1}$ ; $A_{r_1}$ ; $T_{r_1}$) an eine Fernüberwachungsstation (9).

**19.** Das Verfahren nach Anspruch 1, in welchem die Lieferung eines Hinweises auf die Größe $A_{w_1}$ ; $A_{r_1}$ ; $T_{r_1}$) umfasst:

• Übertragen des beschleunigungsmessenden Signals (acc(t)) an eine Fernüberwachungsstation (9).

**20.** Das Verfahren nach Anspruch 19, in welchem die Größe ($A_{w_1}$ ; $A_{r_1}$ ; $T_{r_1}$) in der Fernüberwachungsstation (9) berechnet wird.

**21.** Das Verfahren nach Anspruch 20, in welchem die Lieferung eines Hinweises auf die Größe ($A_{w_1}$ ; $A_{r_1}$ ; $T_{r_1}$) umfasst:

• Übertragen der Größe ($A_{w_1}$ ; $A_{r_1}$ ; $T_{r_1}$) auf das Fahrzeug (1); und
• Liefern des Hinweises auf die Größe ($A_{w_1}$ ; $A_{r_1}$ ; $T_{r_1}$) an den Insassen des Fahrzeugs (1).

**22.** Ein System (2) zum Überwachen einer Belastung auf den Insassen eines Fahrzeugs (1) durch mechanische Vibrationen, welches umfasst:

• Berechnungsmittel (5) zum Berechnen einer Größe ($A_{w_1}$ ; $A_{r_1}$ ; $T_{r_1}$) bezogen auf das Belastungslevel des Insassen durch mechanische Vibrationen; und
• Signalgebungsmittel (6, 8) zum Liefern eines Hinweises auf die Größe ($A_{w_1}$ ; $A_{r_1}$ : $T_{r_1}$) ;

das System umfasst ferner:

• Bestimmungsmittel (3) zum Bestimmen der Intensität (acc(t)) der mechanischen Vibrationen, denen der Insasse ausgesetzt ist;

und in welchem die Berechnungsmittel (5) eingestellt sind, zum Berechnen der Größe ($A_{w_1}$ ; $A_{r_1}$ ; $T_{r_1}$), als eine Funktion der Intensität (acc(t)) der mechanischen Vibrationen, **dadurch gekennzeichnet, dass** das Bestimmungsmittel (3) umfasst:

• beschleunigungsmessendes Sensormittel (3), das ein beschleunigungsmessendes Signal (acc(t)) liefert, das auf die Intensität der mechanischen Vibrationen hinweist, die auf einem Sitz (4) des Fahrzeugs (1), auf dem der Insasse sitzt, herrschen;

und in welchem die Berechnungsmittel (5) eingestellt sind, zum Berechnen der Größe ($A_{w_1}$ ; $A_{r_1}$ ; $T_{r_1}$) als eine Funktion des beschleunigungsmessenden Signals (acc(t)) und einer Übertragungsfunktion des Sitzes (4).

**23.** Das System nach Anspruch 22, in welchem die Größe ($A_{w_1}$) direkt auf das verbleibende Belastungslevel des Insassen durch mechanische Vibrationen hinweist.

**24.** Das System nach Anspruch 22, in welchem die Größe ($A_{r_1}$ ; $T_{r_1}$) auf ein verbleibendes Belastungslevel des Insassen durch mechanische Vibrationen hinweist.

**25.** Das System nach Anspruch 22, in welchem die beschleunigungsmessenden Sensormittel (3) unter dem Sitz (4) getragen werden.

**26.** Das System nach Anspruch 22, in welchem die Berechnungsmittel (5) eingestellt sind zum:

• Filtern des beschleunigungsmessenden Signals (acc(t)) mittels eines Griffin-Filters;
• Berechnen der Größe ($A_{w_1}$ ; $A_{r_1}$ ; $T_{r_1}$) als eine Funktion des gefilterten beschleunigungsmessenden Signals und der Übertragungsfunktion des Sitzes (4).

**27.** Das System nach Anspruch 26, in welchem die Berechnungsmittel (5) eingestellt sind zum:

Umwandeln in die Frequenzbereichabschnitte des beschleunigungsmessenden Signals(acc(t)), um eine Spektrensequenz zu erhalten;

• Multiplizieren eines jeden Spektrums durch die Übertragungsfunktion des Sitzes (4) und durch eine Übertragungsfunktion des Griffin-Filters;
• Berechnen eines mittleren Spektrums ($FFT_{av_i}$) als eine Funktion der gefilterten Spektren;
• Berechnen eines quadratischen Mittels ($RMS_i$) als eine Funktion des mittleren Spektrums ($FFT_{av_i}$); und
• Berechnen der Größe ($A_{w_1}$ ; $A_{r_1}$ ; $T_{r_1}$) als eine Funktion des quadratischen Mittels ($RMS_i$).

**28.** Das System nach Anspruch 27, in welchem die Berechnungsmittel (5) eingestellt sind zum:

• Berechnen einer gewichteten Beschleunigung ($A_{w_1}$).

**29.** Das System nach Anspruch 28, in welchem die Berechnungsmittel (5) eingestellt sind zum:

• Berechnen einer verbleibenden gewichteten Beschleunigung ($A_{r_1}$) als eine Funktion der gewichteten Beschleunigung ($A_{w_1}$) und eines Grenzwerts der gewichteten Beschleunigung ($A_{lim}$).

**30.** Das System nach Anspruch 29, in welchem die Berechnungsmittel (5) eingestellt sind zum:

• Berechnen einer verbleibenden Belastungszeit ($T_{r_1}$) als eine Funktion der verbleibenden gewichteten Beschleunigung ($A_{r_1}$).

**31.** Das System nach Anspruch 22, in welchem die Berechnungsmittel (5) von dem Fahrzeug (1) getragen werden.

**32.** Das System nach Anspruch 22, in welchem die Signalgebungsmittel (6, 8) eingestellt sind zum Liefern eines direkten Hinweises ($A_{w_1}$) des Belastungslevels des Insassen durch mechanische Vibrationen.

**33.** Das System nach Anspruch 23, in welchem die Signalgebungsmittel (6, 8) zum Liefern eines Hinweises ( $A_{r_1}$ ; $T_{r_1}$) des verbleibenden Belastungslevels des Insassen durch mechanische Vibrationen eingestellt sind.

**34.** Das System nach Anspruch 28, in welchem die Signalgebungsmittel (6) zum Liefern eines Hinweises auf die gewichtete Beschleunigung ($A_{w_1}$) eingestellt sind.

**35.** Das System nach Anspruch 29, in welchem die Signalgebungsmittel (6, 8) zum Liefern eines direkten Hinweises der verbleibenden gewichteten Beschleunigung ($A_{r_1}$) eingestellt sind.

**36.** Das System nach Anspruch 29, in welchem die Signalgebungsmittel (6, 8) zum Liefern eines Hinweises auf die verbleibende gewichtete Beschleunigung ($A_{r_1}$) hinsichtlich eines Grenzwerts der gewichteten Beschleunigung ($A_{lim}$) eingestellt sind.

**37.** Das System nach Anspruch 30, in welchem die Signalgebungsmittel (6, 8) zum Liefern eines Hinweises auf die verbleibende Belastungszeit ($T_{r_1}$) eingestellt sind.

**38.** Das System nach Anspruch 22, in welchem die Signalgebungsmittel (6, 8) von dem Fahrzeug (1) getragen werden.

**39.** Das System nach Anspruch 22, in welchem die Signalgebungsmittel (6, 8) Übertragungsmittel (8) zum Übertragen der Größe ($A_{w_1}$ ; $A_{r_1}$ ; $T_{r_1}$) an eine Fernüberwachungsstation (9) umfassen.

**40.** Das System nach Anspruch 22, in welchem die Signalgebungsmittel (6, 8) Übertragungsmittel (8) zum Übertragen des beschleunigungsmessenden Signals (acc(t)) an eine Fernüberwachungsstation (9) umfassen.

**41.** Das System nach Anspruch 40, in welchem die Berechnungsmittel (5) in der Fernüberwachungsstation (9) angeordnet sind.

**42.** Das System nach Anspruch 41, in welchem die Signalgebungsmittel (6, 8) Übertragungsmittel (8) umfassen, die in der Fernüberwachungsstation (9) zum Übertragen der Größe ($A_{w_1}$ ; $A_{r_1}$ ; $T_{r_1}$) an das Fahrzeug (1) angeordnet sind, und Mittel zum Empfangen (8), die von dem Fahrzeug (1) zum Empfangen der übertragenen Größe ($A_{w_1}$ ; $A_{r_1}$; $T_{r_1}$) getragen werden;
und in welchem die Signalgebungsmittel (6, 8) zum Liefern des Hinweises auf die Größe ($A_{w_1}$ ; $A_{r_1}$; $T_{r_1}$) an den Insassen des Fahrzeugs (1) eingestellt sind.

**43.** Ein Fahrzeug (1), ausgestattet mit einem System (2) zum Überwachen einer Belastung eines Insassen des Fahrzeugs (1) durch mechanische Vibrationen nach einem der Ansprüche 22 bis 42.

**Revendications**

**1.** Procédé pour surveiller une exposition de l'occupant d'un véhicule (1) à des vibrations mécaniques, comprenant les étapes suivantes :

  • calculer une quantité ($A_{w1}$ ; $A_{r1}$ ; $T_{r1}$) corrélée au niveau d'exposition de l'occupant aux vibrations mécaniques ; et
  • fournir une indication de ladite quantité ($A_{w1}$ ; $A_{r1}$ ; $T_{r1}$) ;

l'étape de calculer une quantité ($A_{w1}$ ; $A_{r1}$ ; $T_{r1}$) corrélée au niveau d'exposition de l'occupant aux vibrations mécaniques comprend :

  • déterminer l'intensité (acc(t)) des vibrations mécaniques auxquelles ledit occupant est exposé ; et
  • calculer ladite quantité ($A_{w1}$ ; $A_{r1}$ ; $T_{r1}$) en fonction de l'intensité (acc(t)) desdites vibrations mécaniques ; le procédé étant **caractérisé en ce que** l'étape de déterminer l'intensité (acc(t)) des vibrations mécaniques auxquelles ledit occupant est exposé comprend ce qui suit :
  • générer un signal accélérométrique (acc(t)) indiquant l'intensité des vibrations mécaniques présentes sur un siège (4) dudit véhicule (1) sur lequel ledit occupant est assis ;

et **en ce que** l'étape de calculer ladite quantité ($A_{w1}$ ; $A_{r1}$ ; $T_{r1}$) comprend :

• calculer ladite quantité ($A_{w1}$ ; $A_{r1}$ ; $T_{r1}$) en fonction dudit signal accélérométrique (acc(t)) et d'une fonction de transfert dudit siège (4).

2. Procédé selon la revendication 1, dans lequel ladite quantité ($A_{w1}$) indique directement ledit niveau résiduel d'exposition de l'occupant à des vibrations mécaniques.

3. Procédé selon la revendication 1, dans lequel ladite quantité ($A_{r1}$ ; $T_{r1}$) indique un niveau résiduel d'exposition de l'occupant à des vibrations mécaniques.

4. Procédé selon la revendication 1, dans lequel générer un signal accélérométrique (acc(t)) comprend :

• fournir des moyens de capteur accélérométrique (3) sous ledit siège (4).

5. Procédé selon la revendication 1 ou la revendication 4, dans lequel calculer ladite quantité ($A_{w1}$ ; $A_{r1}$ ; $T_{r1}$) en fonction dudit signal accélérométrique (acc(t)) et d'une fonction de transfert dudit siège (4) comprend :

• filtrer ledit signal accélérométrique (acc(t)) via un filtre de Griffin ; et
• calculer ladite quantité ($A_{w1}$ ; $A_{r1}$ ; $T_{r1}$) en fonction dudit signal accélérométrique filtré et de ladite fonction de transfert dudit siège (4).

6. Procédé selon la revendication 5, dans lequel calculer ladite quantité ($A_{w1}$ ; $A_{r1}$ ; $T_{r1}$) en fonction dudit signal accélérométrique filtré et de ladite fonction de transfert dudit siège (4) comprend :

• convertir des portions dudit signal accélérométrique (acc(t)) dans le domaine fréquentiel, en obtenant une séquence de spectres ;
• multiplier chacun desdits spectres par ladite fonction de transfert dudit siège (4) et par une fonction de transfert dudit filtre de Griffin ;
• calculer un spectre moyen ($FFT_{avi}$) en fonction desdits spectres filtrés ;
• calculer une moyenne quadratique ($RMS_i$) en fonction dudit spectre moyen ($FFT_{avi}$) ; et
• calculer ladite quantité ($A_{w1}$ ; $A_{r1}$ ; $T_{r1}$) en fonction de ladite moyenne quadratique ($RMS_i$).

7. Procédé selon la revendication 6, dans lequel calculer ladite quantité ($A_{w1}$ ; $A_{r1}$ ; $T_{r1}$) comprend :

• calculer une accélération pondérée ($A_{w1}$).

8. Procédé selon la revendication 7, dans lequel calculer ladite quantité ($A_{w1}$ ; $A_{r1}$ ; $T_{r1}$) comprend en outre :

• calculer une accélération pondérée résiduelle ($A_{r1}$) en fonction de ladite accélération pondérée ($A_{w1}$) et d'une accélération pondérée limite ($A_{lim}$).

9. Procédé selon la revendication 8, dans lequel calculer ladite quantité ($A_{w1}$ ; $A_{r1}$ ; $T_{r1}$) comprend en outre :

• calculer un temps d'exposition résiduel ($T_{r1}$) en fonction de ladite accélération pondérée résiduelle ($A_{r1}$).

10. Procédé selon l'une quelconque des revendications précédentes, dans lequel le calcul de ladite quantité ($A_{w1}$ ; $A_{r1}$ ; $T_{r1}$) est effectué à bord dudit véhicule (1).

11. Procédé selon l'une quelconque des revendications précédentes, dans lequel fournir une indication de ladite quantité ($A_{w1}$) comprend :

• fournir une indication directe ($A_{w1}$) dudit niveau d'exposition de l'occupant à des vibrations mécaniques.

12. Procédé selon l'une quelconque des revendications 2 à 10, dans lequel fournir une indication de ladite quantité ($A_{r1}$, $T_{r1}$) comprend :

• fournir une indication ($A_{r1}$, $T_{r1}$) dudit niveau résiduel d'exposition de l'occupant à des vibrations mécaniques.

**13.** Procédés selon la revendication 7, dans lequel fournir une indication de ladite quantité ($A_{w1}$) comprend :

   • fournir une indication de ladite accélération pondérée ($A_{w1}$).

**14.** Procédé selon la revendication 8, dans lequel fournir une indication de ladite quantité ($A_{r1}$, $T_{r1}$) comprend :

   • fournir une indication directe de ladite accélération pondérée résiduelle ($A_{r1}$).

**15.** Procédé selon la revendication 8, dans lequel fournir une indication de ladite quantité ($A_{r1}$, $T_{r1}$) comprend :

   • fournir une indication de ladite accélération pondérée résiduelle ($A_{r1}$) par rapport à une accélération pondérée limite ($A_{lim}$).

**16.** Procédé selon la revendication 9, dans lequel fournir une indication de ladite quantité ($A_{r1}$, $T_{r1}$) comprend :

   • fournir une indication dudit temps d'exposition résiduel ($T_{r1}$).

**17.** Procédé selon l'une quelconque des revendications précédentes, dans lequel ladite indication de ladite quantité ($A_{r1}$, $T_{r1}$) est fournie audit occupant dudit véhicule (1).

**18.** Procédé selon l'une quelconque des revendications 1 à 16, dans lequel fournir une indication de ladite quantité ($A_{w1}$, $A_{r1}$, $T_{r1}$) comprend :

   • transmettre ladite quantité ($A_{w1}$, $A_{r1}$, $T_{r1}$) à une station de télésurveillance (9).

**19.** Procédé selon la revendication 1, dans lequel fournir une indication de ladite quantité ($A_{w1}$, $A_{r1}$, $T_{r1}$) comprend :

   • transmettre ledit signal accélérométrique (acc(t)) à une station de télésurveillance (9).

**20.** Procédé selon la revendication 19, dans lequel ladite quantité ($A_{w1}$ ; $A_{r1}$ ; $T_{r1}$) est calculée dans ladite station de télésurveillance (9).

**21.** Procédé selon la revendication 20, dans lequel fournir une indication de ladite quantité ($A_{w1}$, $A_{r1}$, $T_{r1}$) comprend :

   • transmettre ladite quantité ($A_{w1}$ ; $A_{r1}$ ; $T_{r1}$) audit véhicule (1) ; et
   • fournir ladite indication de ladite quantité ($A_{w1}$, $A_{r1,}$ $T_{r1}$) audit occupant dudit véhicule (1) .

**22.** Système (2) pour surveiller une exposition de l'occupant d'un véhicule (1) à des vibrations mécaniques, comprenant :

   • des moyens de calcul (5) pour calculer une quantité ($A_{w1}$ ; $A_{r1}$ ; $T_{r1}$) corrélée au niveau d'exposition de l'occupant à des vibrations mécaniques ; et
   • des moyens de signalisation (6, 8) pour fournir une indication de ladite quantité ($A_{w1}$ ; $A_{r1}$ ; $T_{r1}$) ;

le système comprenant en outre :

   • des moyens de détermination (3) pour déterminer l'intensité (acc(t)) des vibrations mécaniques auxquelles ledit occupant est exposé ;

et dans lequel lesdits moyens de calcul (5) sont configurés pour calculer ladite quantité ($A_{w1}$ ; $A_{r1}$ ; $T_{r1}$) en fonction de l'intensité (acc(t)) desdites vibrations mécaniques, **caractérisé en ce que** lesdits moyens de détermination (3) comprennent :

   • des moyens de capteur accélérométrique (3) fournissant un signal accélérométrique (acc(t)) indiquant l'intensité des vibrations mécaniques présentes sur un siège (4) dudit véhicule (1) sur lequel ledit occupant est assis ;

et dans lequel lesdits moyens de calcul (5) sont configurés pour calculer ladite quantité ($A_{w1}$ ; $A_{r1}$ ; $T_{r1}$) en fonction

dudit signal accélérométrique (acc(t)) et d'une fonction de transfert dudit siège (4).

23. Système selon la revendication 22, dans lequel ladite quantité ($A_{w1}$) indique directement ledit niveau résiduel d'exposition de l'occupant à des vibrations mécaniques.

24. Système selon la revendication 22, dans lequel ladite quantité ($A_{r1}$ ; $T_{r1}$) indique un niveau résiduel d'exposition de l'occupant à des vibrations mécaniques.

25. Système selon la revendication 22, dans lequel lesdits moyens capteurs accélérométriques (3) sont transportés sous ledit siège (4).

26. Système selon la revendication 22, dans lequel lesdits moyens de calcul (5) sont configurés pour :

   • filtrer ledit signal accélérométrique (acc(t)) via un filtre de Griffin ;
   • calculer ladite quantité ($A_{w1}$ ; $A_{r1}$ ; $T_{r1}$) en fonction dudit signal accélérométrique filtré et de ladite fonction de transfert dudit siège (4).

27. Système selon la revendication 26, dans lequel lesdits moyens de calcul (5) sont configurés pour :

   • convertir dans le domaine fréquentiel des portions dudit signal accélérométrique (acc(t)), pour obtenir une séquence de spectres ;
   • multiplier chacun desdits spectres par ladite fonction de transfert dudit siège (4) et par une fonction de transfert dudit filtre de Griffin ;
   • calculer un spectre moyen ($FFT_{av1}$) en fonctions desdits spectres filtrés ;
   • calculer une moyenne quadratique ($RMS_i$) en fonction dudit spectre moyen ($FFT_{av1}$) ; et
   • calculer ladite quantité ($A_{w1}$ ; $A_{r1}$ ; $T_{r1}$) en fonction de ladite moyenne quadratique ($RMS_i$).

28. Système selon la revendication 27, dans lequel lesdits moyens de calcul (5) sont configurés pour :

   • calculer une accélération pondérée ($A_{w1}$).

29. Système selon la revendication 28, dans lequel lesdits moyens de calcul (5) sont configurés pour :

   calculer une accélération pondérée résiduelle ($A_{r1}$) en fonction de ladite accélération pondérée ($A_{w1}$) et d'une accélération pondérée limite ($A_{lim}$).

30. Système selon la revendication 29, dans lequel lesdits moyens de calcul (5) sont configurés pour :

   • calculer un temps d'exposition résiduel ($T_{r1}$) en fonction de ladite accélération pondérée résiduelle ($A_{r1}$).

31. Système selon la revendication 22, dans lequel lesdits moyens de calcul (5) sont transportés par ledit véhicule (1).

32. Système selon la revendication 22, dans lequel lesdits moyens de signalisation (6, 8) sont configurés pour fournir une indication directe ($A_{w1}$) dudit niveau d'exposition de l'occupant à des vibrations mécaniques.

33. Système selon la revendication 23, dans lequel lesdits moyens de signalisation (6, 8) sont configurés pour fournir une indication ($A_{r1}$, $T_{r1}$) dudit niveau résiduel d'exposition de l'occupant à des vibrations mécaniques.

34. Système selon la revendication 28, dans lequel lesdits moyens de signalisation (6) sont configurés pour fournir une indication de ladite accélération pondérée ($A_{w1}$).

35. Système selon la revendication 29, dans lequel lesdits moyens de signalisation (6, 8) sont configurés pour fournir une indication directe de ladite accélération pondérée résiduelle ($A_{r1}$).

36. Système selon la revendication 29, dans lequel lesdits moyens de signalisation (6, 8) sont configurés pour fournir une indication de ladite accélération pondérée résiduelle ($A_{r1}$) par rapport à une accélération pondérée limite ($A_{lim}$).

37. Système selon la revendication 30, dans lequel lesdits moyens de signalisation (6, 8) sont configurés pour fournir une indication dudit temps d'exposition résiduel (Tr1).

38. Système selon la revendication 22, dans lequel lesdits moyens de signalisation (6, 8) sont transportés par ledit véhicule (1).

39. Système selon la revendication 22, dans lequel lesdits moyens de signalisation (6, 8) comprennent des moyens de transmission (8) pour transmettre ladite quantité ($A_{w1}$, $A_{r1}$, $T_{r1}$) à une station de télésurveillance (9).

40. Système selon la revendication 22, dans lequel lesdits moyens de signalisation (6, 8) comprennent des moyens de transmission (8) pour transmettre ledit signal accélérométrique (acc(t))) à une station de télésurveillance (9).

41. Système selon la revendication 40, dans lequel lesdits moyens de calcul (5) sont agencés dans ladite station de télésurveillance (9).

42. Système selon la revendication 41, dans lequel lesdits moyens de signalisation (6, 8) comprennent des moyens de transmission (8) agencés dans ladite station de télésurveillance (9) pour transmettre ladite quantité ($A_{w1}$, $A_{r1}$, $T_{r1}$) audit véhicule (1), et des moyens de réception (8) transportés par ledit véhicule (1) pour recevoir ladite quantité ($A_{w1}$, $A_{r1}$, $T_{r1}$) transmise ;
et dans lequel lesdits moyens de signalisation (6, 8) sont configurés pour fournir ladite indication de ladite quantité ($A_{w1}$, $A_{r1}$, $T_{r1}$) audit occupant dudit véhicule (1).

43. Véhicule (1) équipé d'un système (2) pour surveiller l'exposition d'un occupant dudit véhicule (1) à des vibrations mécaniques selon l'une quelconque des revendications 22 à 42.

Fig. 1

```
                    ┌─────────────────────┐
                    │        Start        │
                    └─────────────────────┘
                               │
                               ▼
100 ─┐  ┌──────────────────────────────────────────┐
     │  │            Acquire acc(t)                 │
        └──────────────────────────────────────────┘
                               │
                               ▼
110 ─┐  ┌──────────────────────────────────────────┐
     │  │             Filter acc(t)                 │
        └──────────────────────────────────────────┘
                               │
                               ▼
120 ─┐  ┌──────────────────────────────────────────┐
     │  │            Digitize acc(t)                │
        └──────────────────────────────────────────┘
                               │
                               ▼
130 ─┐  ┌──────────────────────────────────────────┐
     │  │             Calculate FFT                 │
        └──────────────────────────────────────────┘
                               │
                               ▼
140 ─┐  ┌──────────────────────────────────────────┐
     │  │       Multiply by seat transfer fct.      │
        └──────────────────────────────────────────┘
                               │
                               ▼
150 ─┐  ┌──────────────────────────────────────────┐
     │  │  Multiply by transfer fct. of Griffin filter │
        └──────────────────────────────────────────┘
                               │
                               ▼
160 ─┐  ┌──────────────────────────────────────────┐
     │  │   Calculate average of filtered spectra   │
        └──────────────────────────────────────────┘
                               │
                               ▼
170 ─┐  ┌──────────────────────────────────────────┐
     │  │            Calculate  RMS                 │
        └──────────────────────────────────────────┘
                               │
                               ▼
180 ─┐  ┌──────────────────────────────────────────┐
     │  │            Calculate $A_w$                │
        └──────────────────────────────────────────┘
                               │
                               ▼
190 ─┐  ┌──────────────────────────────────────────┐
     │  │            Calculate $A_r$                │
        └──────────────────────────────────────────┘
                               │
                               ▼
200 ─┐  ┌──────────────────────────────────────────┐
     │  │            Calculate  $T_r$               │
        └──────────────────────────────────────────┘
                               │
                               ▼
210 ─┐  ┌──────────────────────────────────────────┐
     │  │             Display $T_r$                 │
        └──────────────────────────────────────────┘
                               │
                               ▼
                    ┌─────────────────────┐
                    │         End         │
                    └─────────────────────┘
```

# Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2497354

- US 2001044685 A